# EUROPEAN PATENT APPLICATION

(11) **EP 1 939 726 A1**
(43) Date of publication of application: **02.07.2008**
(21) Application number: 06791110.7
(22) Date of filing: 25.09.2006
(51) Int. Cl.: G06F 9/00

(54) **A METHOD FOR REALIZING MULTITASK IN MEDIA PLAYING DEVICE**

(30) Priority: 26.09.2005 CN 200510100041
(71) Applicant: Netac Technology Co., Ltd., Shenzhen, Guangdong 518057 (CN)
(72) Inventor: LIU, Yining, Shenzhen Guangdong 518057 (CN)
(74) Representative: Cabinet Plasseraud
(86) International application number: PCT/CN2006/002521
(87) International publication number: WO 2007/033615

(57) **Abstract**

This invention provides a method for multi-tasking on a media player in a time-slice-circular manner. The method comprises the step of: dividing each of different functions of the media player to a plurality of tasks by a controller unit; setting a priority to each of the tasks by the controller unit; checking the priority of said each of the tasks, and changing a state of a task from "READY" to "EXECUTING" according to the priority of the task by the controller unit; and executing the tasks alternately by using time slices associated therewith by the controller unit. Since all the tasks are executed within a short time, from the user's point of view, all the tasks are executed simultaneously. Thus, multi-tasking on the media player is achieved.

## Description

### Technical Field

This invention relates to the media playing technology, and particularly to a method for multi-tasking on a media player.

### Background of the Invention

The electronic information technique develops. Media players, such as MP3 players, become popular due to its multiple-functionality like music-playing, picture-browsing, text-displaying, gaming, FM radio, etc.

However, such devices can provide only one function at a time no matter how abundant the functions are. Users cannot read text, browse picture, or play game while music is playing or FM radio is being received.

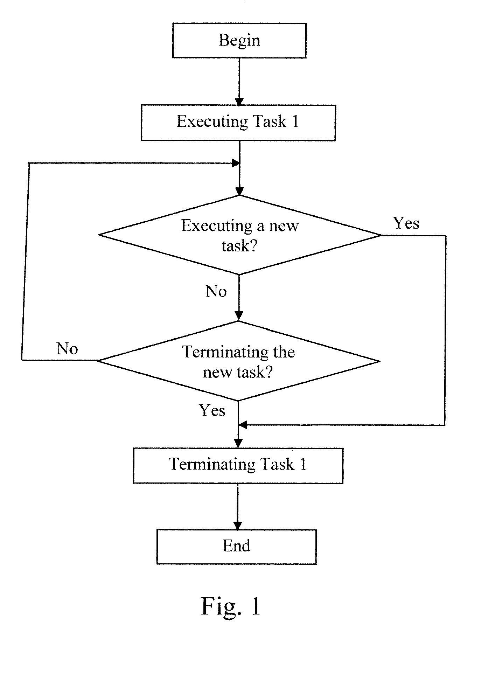

Fig. 1 is a flowchart showing a method of executing tasks on a conventional media player. Without the multi-tasking mechanism, applications of the device will be executed only in a single-tasking manner. A certain task under execution occupies all system resources, such as control of CPU, access of stacks and registers, and control of equipments such as internal memory devices and peripherals. Once a new task needs to be executed, the current task must be stopped so as to release the system resources to ensure the execution of the new task.

The above-mentioned method needs call in and call out execution codes between an external memory and an internal memory constantly. Before the execution codes are called out, execution environmental parameters of the current task will be saved. Before the execution codes are called in, execution environmental parameters will be restored as the previously saved ones. Thus, the execution environmental parameters must be frequently read and written between high-speed equipment and low-speed one which determines the execution speed of the entire system, resulting in a low-speed execution of the system.

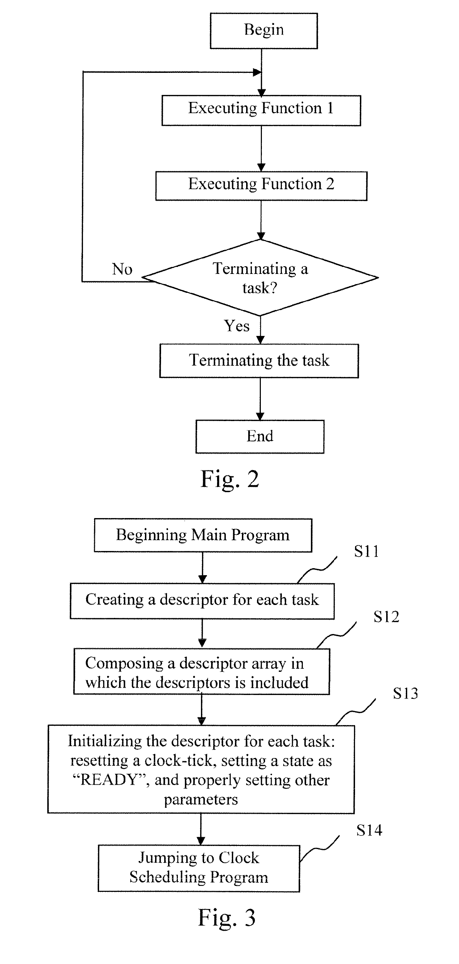

Fig. 2 is a solution to the above problem in the art. By adding function codes of a new task into a current task, the functions of both the current and new tasks can be executed alternately. It seems to a user that two or more tasks are executed simultaneously. In fact, all the function codes of the tasks to be executed are put into a same task and executed by using time slice circling.

However, since different function codes executed in the time slice circling model, without assigning any priority for each function, those high-speed execution of the codes has to wait until the low-speed execution of the codes is finished. Especially, if the execution of either of two functions must wait until the other is executed to a certain level, deadly embrace is likely to occur.

To this end, a new method which enables multi-tasking on media players is provided in this invention.

### Summary of the Invention

The objective of the present invention is to provide a method for multi-tasking on media playing devices.

The objective of the present invention is to provide a method for multi-tasking on media playing devices.

A method for multi-tasking on a media player in a time-slice-circular manner is provided in the present invention. The media player comprises a controller unit. The method comprises the steps of:
dividing each of different functions of the media player to a plurality of tasks by the controller unit;
setting a priority to each of the tasks by the controller unit;
checking the priority of said each of the tasks, and changing a state of a task from "READY" to "EXECUTING" according to the priority of the task by the controller unit; and
executing the tasks alternately by using time slices associated therewith by the controller unit.

In the method of the present invention, when all the tasks are in a state of "READY", a task with a higher priority will be executed first.

In the method of the present invention, execution time of said each of the tasks is determined by setting a clock-tick in a descriptor of said each of the tasks. And the step of dividing is realized by the controller unit through creating a descriptor for said each of the tasks.

According to the present invention, the plurality of tasks will take resources of a CPU and the system in turn so as to be executed alternately within a certain time according to a specific algorithm in the controller unit. Since all the tasks are executed within a short time, from the user's point of view, all the tasks are executed simultaneously. Thus, multi-tasking on the media player is achieved.

### Brief Description of the Drawing

Fig 1 is a flowchart showing the conventional method for executing tasks on media players;

Fig. 2 is another flowchart showing the conventional method for executing tasks on media players;

Fig 3 is a flowchart showing a process of creating a descriptor and an initialization process in the method for multi-tasking on media players according to the present invention;

Fig 4 is a flowchart showing a process of clock scheduling in the method for multi-tasking on media players according to the present invention;

Fig 5 is a flowchart showing execution of the task of audio playing and the idle process according to the present invention;

Fig 6 is a flowchart showing executing the process of scheduling the hung up task according to the present invention; and

Fig. 7 is a flowchart showing executing the process of the clock interrupting according to the present invention.

### Detailed Description

A media player is normally provided with a controller unit, an input unit, a displayer unit, and an audio output unit. The controller unit is provided with a firmware to enable functions of the media player.

This invention provides a method for executing multiple tasks on the media player in a time-slice-circular manner. This method comprises a process of dividing each function of the media player to a plurality of tasks, a process of setting a priority for each task, a process of creating a descriptor for each task, a initialization process, a clock scheduling process, a process of executing the tasks, a process of idling a task, a process of scheduling a task at "HANGING-UP" state, and a process of interrupting clock.

As known in the art, the media player typically has multiple functions, such as audio-playing, picture-browsing, text-displaying, gaming, FM-receiving, etc. Each of these functions is divided to a plurality of tasks which are controlled and executed by the firmware in the controller. The execution of the tasks will take resources of a CPU and the system in turn under the control of the controller unit. Since all the tasks are executed within a short time, from the user's point of view, all the tasks are executed simultaneously. Thus, multi-tasking on the media player is achieved.

According to the invention, each task is given a priority according to a specific algorithm. Different tasks require different CPU resource and system resource. For example, decoding MP3 needs more calculation ability than that for decoding a picture. Some tasks must run in a real time but others do not. For example, the user may be aware of a pause of MP3-playing, but may not care about a delay of picture-displaying. Besides, some functions like MP3-playing may be used more often than others like text-displaying. Therefore, when all the tasks are in a state of "READY", a higher-priority task should be executed first. A lower-priority task will never be executed until the higher-priority task is terminated and hung up to release the CPU resource and system resources. In this way, time slices can be properly allocated to different tasks so as to improve the efficiency and avoid waste of the system resources.

According to the invention, dividing each function to tasks and setting the priority are performed by creating the descriptor for each task by the controller unit. The controller unit creates the descriptor, sets the priority and clock-tick for each task with a specific algorithm. All tasks are initially set "READY" state. The controller unit retrieves a highest-priority task and changes its state from "READY" to "EXECUTING" so that the highest-priority task is executed according to the clock-tick as set in the descriptor of the task.

According to the invention, execution time of one task is determined by the clock-tick as set in the descriptor of the task, so that all the tasks can be executed alternately and repeatedly according to the time slices respectively allocated to the tasks. When one task is executing, its state is "EXECUTING", while the state of the other tasks is "READY". Only after the task at "EXECUTING" state is terminated and hung up upon the ending of its clock-tick, the other tasks may be executed. The execution of the current task cannot be interrupted by the other tasks in the state of "READY". At this moment, the state of the task is changed to "READY". The priority of each task is checked again to determine a next task to be executed. If the currently executed task releases the CPU resource and is hung up during its execution, the priority of this task will be still set as the highest so that it can be executed continually.

For example, a media player has functions of audio-playing, picture-browsing, text-displaying, gaming, and FM-receiving, each of which is divided to a plurality of tasks so that the player can work under multiple tasks. The first priority "15" is set for audio-playing; the second priority "14" for picture-browsing; the third priority "13" for text-displaying; and so on, and the lowest priority is set to a task in a state of "IDLE". After the media player is turn on and initialized, the controller unit checks the priority of each task, sets the state of each task as "READY", and assigns one time slice as 10ms for each task. Thus, multiple time slices may respectively correspond to multiple tasks according to the priority. When a user's command is input via, e.g. keyboard, touch screen, etc., an associated task like "playing-audio" is executed according to previous settings, and its state is "EXECUTING" within the corresponding time slice, while the state of the other tasks is "READY".

When the user wishes to execute a new task, such as picture-browsing, the controller unit checks the priority of this new task. If the priority of the new task is higher than that of the current task, the new task will be executed immediately according to the time slice corresponding to the new task, and the state of the new task will be changed to "EXECUTING". If the priority of the new task is lower than that of the current task, the new task will not be executed until the execution of the current task is terminated.

Fig 3 is a flowchart showing the process of creating a task descriptor and the initialization process according to the present invention.
At step S 11, a descriptor is created for each task. The descriptor includes data necessary to describe characters of each task, such as ID, priority, state, clock-tick, an initial address of execution codes, an initial address of the stack, and size of the tack.
Step S12 is to create a descriptor array which contains addresses of descriptors of all tasks for the ease of management.
At step S12, the tasks are initialized. For each task, the size of the necessary stack and the priority are set, the space of the stack and the ID are provided, the state is set as "READY", the clock is reset, and the initial address of the execution codes as well as the initial address and size of the stack are recorded. All the tasks are initialized in this way.
At step S12, the process is switched to the process of clock scheduling.

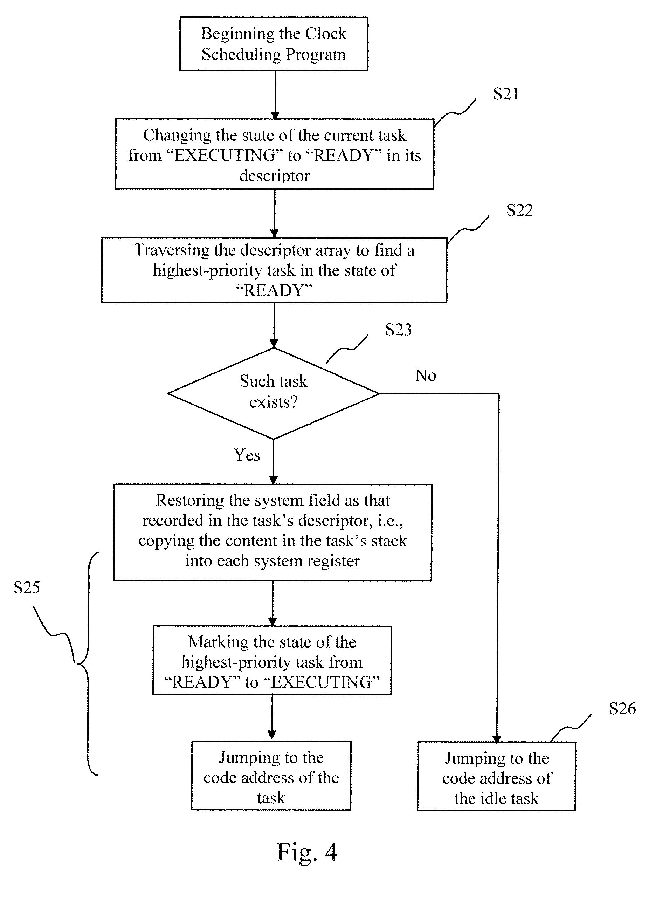

Fig 4 is a flowchart showing the process of clock scheduling according to the present invention.
At step S21, if a task is determined to be in a state of "EXECUTING", the state of the task is changed to "READY". Otherwise the process proceeds to step S22.
At step S22, the descriptor array is scanned throughout to find a task with the highest priority and in the state of "READY".
At step S23, if there is any task that meets the above requirements, the process proceeds to step S24. Otherwise the process proceeds to step S26.
At step S24, if the task that meets the requirements is the current task, the state of the current task is changed to "EXECUTING" so that the current task is executed. For example, if the current task is to play audio, the process of audio-playing is implemented. So does the other task.
At step S25, if the task that meets the requirements is not the current task, all current system field data are saved into the stack of the current task. The content of the stack of a READY task with the highest priority is then copied as the current system field, and the state of the task with the highest priority is changed from "READY" to "EXECUTING" so that this task is executed. For example, if the READY task with the highest priority is to play audio, the process of audio-playing is start. If the READY task with the highest priority is to browse picture, the process of picture-browsing is implemented.
At step S26, if no task that meets the requirements is found, the process of clock scheduling jumps to the address of an IDLE task, i.e., the IDLE task is executed.

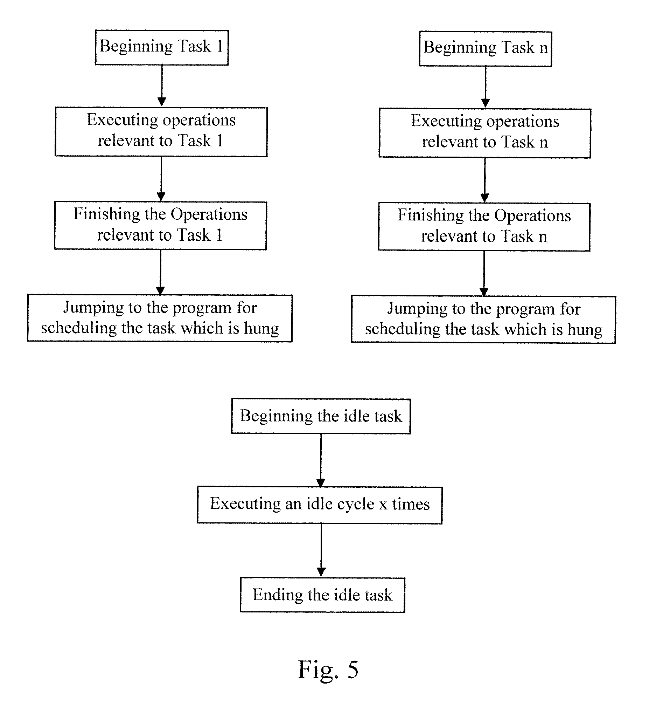

Fig 5 is a flowchart showing execution of the audio-playing task and the idle task according to the present invention.
At step S31, an operation relevant to the task of audio-playing is executed.
At step S32, a cycle of audio-playing is executed once, and the execution of the relevant operation terminates.
At step S33, the process of scheduling a task which is hung up is implemented by jumping to the address of the program codes of scheduling the task which is hung up.

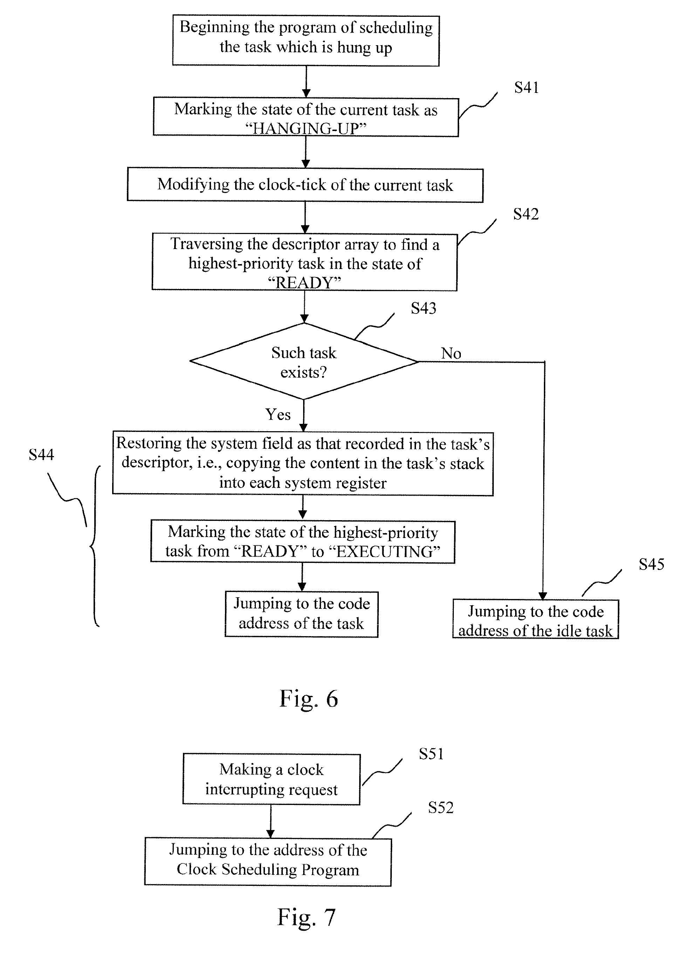

Fig 6 is a flowchart showing execution of the process of scheduling the task which is hung up according to the present invention.
At step S41, the state of the current task is changed from "EXECUTING" to "HANGING-UP", and the current system field data are saved into the stack of the current task.
At step S42, the descriptor array is scanned throughout to find a task with the highest priority and in the state of "READY".
At step S43, if there is any task that meets the above requirements, the process proceeds to step S44. Otherwise the process proceeds to step S46.
At step S44, the content of the stack of the READY task with the highest priority is copied as the current system field, and the state of the task with the highest priority is changed from "READY" to "EXECUTING" so as to execute this task. For example, if the READY task with the highest priority is to play audio, the task of audio-laying is started. If the READY task with the highest priority is to browse picture, so does the task of picture-browsing.
At step S45, if no task that meets the requirement is found, the process goes to the address of an IDLE task, i.e., the IDLE task is executed.

Fig. 7 is a flowchart showing execution of the process of interrupting clock according to the present invention.
At step S51, a request for interrupting clock is made.
At step S52, the process of the clock scheduling is implemented by jumping to the address of the clock scheduling program codes.

According to the invention, different tasks are viewed as different modules. One single scheduling process is used to schedule all of tasks so as to eliminate the failure possibility of the entire system. Moreover, since a single function is executed in the multiple modules, the complexity of application software and modules is reduced. It is easy for developers to program since a plurality of complicated tasks are treated as one task by task.

In the present invention, since the system field data of different tasks are saved into different stacks, the coupling of the entire system is simplified and the system reliability is enhanced accordingly.

In practice, users may modify programs in the firmware of the controller to set priority and clock-tick for each task. The priority of each task may be set from zero to up, or from a certain number to zero. In both scenarios, the implementation of executing multiple tasks on the audio playing device can be achieved.

## Claims

1. A method for multi-tasking on a media player including a controller unit, comprising the steps of
1) dividing each of different functions of the media player to a plurality of tasks by the controller unit;
2) setting a priority to each of the tasks by the controller unit;
3) checking the priority of said each of the tasks, and changing a state of a task from "READY" to "EXECUTING" according to the priority of the task by the controller unit; and
4) executing the tasks alternately by using time slices associated therewith by the controller unit.

2. A method for multi-tasking on a media player of claim 1, wherein, when all the tasks are in a state of "READY", a task with a higher priority will be executed first.

3. A method for multi-tasking on a media player of claim 1, wherein execution time of said each of the tasks is determined by setting a clock-tick in a descriptor of said each of the tasks.

4. A method for multi-tasking on a media player of claim 1, wherein the step of dividing is realized by the controller unit through creating a descriptor for said each of the tasks.

5. A method for multi-tasking on a media player of claim 4, wherein the step of creating a descriptor for said each of tasks includes
1) creating the descriptor for said each of the tasks, the descriptor including data necessary to describe characters of said each of the tasks;
2) creating a descriptor array;
3) initializing said each of the tasks, setting the priority for said each of the tasks; and
4) setting the state of said each of the tasks as "READY".

6. A method for multi-tasking on a media player of claim 1, wherein the step 2) further includes
2-1) setting the state of said each of the tasks with the different priority as "READY" by the controller unit; and
2-2) setting a time slice for said each of the tasks, wherein each time slice is corresponding to one of the tasks according to an order of the priority of the tasks.

7. A method for multi-tasking on a media player of claim 1, wherein the step 3) further includes
3-1) checking if there exists a current task in a state of "EXECUTING", if yes, modifying the state of the current task from "EXEXUTING" to "READY";
3-2) scanning a descriptor array throughout to find a first task with the highest priority and in a state of "READY";
3-3) if the first task is the current task, changing the state of the current task to "EXECUTING", and jumping to an address of codes of the current task to execute the current task; if the first task is not the current task, saving current system field data into a stack of the current task, copy a content of a stack of the first task as the current system field data, changing the state of the first task from "READY" to "EXECUTING", and jumping to an address of codes of the first task to execute the first task.
